# EUROPÄISCHE PATENTANMELDUNG

(11) **EP 4 480 746 A1**
(43) Veröffentlichungstag der Anmeldung: **25.12.2024**
(21) Anmeldenummer: 23180282.8
(22) Anmeldetag: 20.06.2023
(51) Int. Cl.: B60N 2/015, B60N 2/02, B60N 2/427

(54) **ENTKOPPLUNGSMECHANISMUS**

(71) Anmelder: Adient US LLC, Plymouth, MI 48170 (US); Autoliv Development AB, 447 83 Vårgårda (SE)
(72) Erfinder: WOLF, Christian, 67811 Dielkirchen (DE); JANNECK, Christian, 67657 Kaiserslautern (DE); MÜHLENBROCK, Ludger, 45665 Recklinghausen (DE); EHLERS, Jens, 25358 Horst (DE); SOHNCHEN, Arndt, 22765 Hamburg (DE)
(74) Vertreter: Liedtke & Partner Patentanwälte

(57) **Zusammenfassung**

Die Erfindung betrifft einen Entkopplungsmechanismus (120) für zwei lösbar miteinander verbundene Bauteile (124, 126). Der Entkopplungsmechanismus (120) umfasst zumindest
- ein Entkopplungsmodul (128) mit einem Arretierungselement (130), das die beiden Bauteile (124, 126) lösbar miteinander verbindet und einen Arretierungsschaft (132) aufweist,
dadurch gekennzeichnet, dass das Entkopplungsmodul (128) ein Arretierungsgehäuse (134) mit einem Führungsraum (136) umfasst, in welchem das Arretierungselement (130) beweglich und in einem verbundenen Zustand (200) der beiden Bauteile (124, 126) mittels eines Kraftspeichers (138) zum arretierenden Verbinden der beiden Bauteile (124, 126) vorgespannt gelagert ist,
wobei der Führungsraum (136) in einem Gehäuseboden (140) für ein Schaftende (142) des Arretierungselements (130) eine Öffnung (144) aufweist, durch welche das Schaftende (142) in dem verbundenen Zustand (200) zumindest bereichsweise aus dem Arretierungsgehäuse (134) herausragt, um die beiden Bauteile (124, 126) arretiert miteinander zu verbinden und wobei das Arretierungsgehäuse (134) für eine Antriebseinheit (148) einen Aufnahmeraum (146) aufweist, der mit dem Führungsraum (136) gekoppelt ist, oder die Antriebseinheit (148) direkt oder indirekt mit dem Arretierungselement (130) bewegungsgekoppelt ist, um bei Auslösung oder Zündung der Antriebseinheit (148) das Arretierungselement (130) mit einer Druckkraft zu beaufschlagen, so dass sich das Arretierungselement (130) beschleunigt in den Führungsraum (136) hineinbewegt und die beiden Bauteile (124, 126) voneinander entkoppelt.

## Beschreibung

Die Erfindung betrifft einen Entkopplungsmechanismus für zwei lösbar miteinander verbundene Bauteile sowie einen Fahrzeugsitz mit einem solchen Entkopplungsmechanismus.

### Stand der Technik

Aus der der DE 10 2009 033 721 B4 und der DE 10 2011 014 869 A1 sind Befestigungsvorrichtungen zur lösbaren Befestigung eines Elements an einem fahrzeugfesten Bauteil bekannt.

### Aufgabe

Der Erfindung liegt die Aufgabe zu Grunde, einen Entkopplungsmechanismus der eingangs genannten Art zu verbessern, der insbesondere auch unter Last entkoppelt, sowie einen entsprechenden Fahrzeugsitz mit einem solchen verbesserten Entkopplungsmechanismus bereitzustellen.

### Lösung

Die erstgenannte Aufgabe wird erfindungsgemäß gelöst durch einen Entkopplungsmechanismus mit den Merkmalen des Anspruchs 1. Die zweitgenannte Aufgabe wird erfindungsgemäß gelöst durch einen Fahrzeugsitz mit den Merkmalen des Anspruchs 10.

Vorteilhafte Ausgestaltungen, welche einzeln oder in Kombination miteinander eingesetzt werden können, sind Gegenstand der Unteransprüche.

Der erfindungsgemäße Entkopplungsmechanismus für zwei lösbar miteinander verbundene Bauteile, zum Beispiel zur Entkopplung eines Teilmoduls von einem Gesamtmodul oder eines Bauteils von einem fahrzeugfesten Bauteil, umfasst zumindest ein Entkopplungsmodul mit einem Arretierungselement, das die beiden Bauteile lösbar miteinander verbindet und das einen Arretierungsschaft aufweist. Das Entkopplungsmodul kann ein Arretierungsgehäuse mit einem inneren Führungsraum umfassen, in welchem das Arretierungselement beweglich und in einem verbundenen Zustand der beiden Bauteile mittels eines Kraftspeichers zum arretierenden Verbinden der beiden Bauteile vorgespannt gelagert ist, wobei der Führungsraum in einem Gehäuseboden für ein Schaftende des Arretierungselements eine Öffnung aufweist, durch welche das Schaftende in dem verbundenen Zustand der beiden Bauteile zumindest bereichsweise aus dem Arretierungsgehäuse herausragt, um die beiden Bauteile arretierend miteinander zu verbinden und wobei das Arretierungsgehäuse für eine Antriebseinheit, zum Beispiel eine Schubeinheit oder eine Gaserzeugungseinheit, einen Aufnahmeraum aufweist, der mit dem Führungsraum gekoppelt ist, oder die Antriebseinheit direkt oder indirekt mit dem Arretierungselement bewegungsgekoppelt ist, um bei Auslösung oder Zündung der Antriebseinheit, insbesondere der Schubeinheit oder der Gaserzeugungseinheit, das Arretierungselement mit einer Druckkraft zu beaufschlagen, so dass sich das Arretierungselement beschleunigt in den Führungsraum hineinbewegt und die beiden Bauteile voneinander entkoppelt oder trennt.

Beispielsweise kann der Führungsraum bei einer als Gaserzeugungseinheit ausgebildeten Antriebseinheit fluidisch mit dem Aufnahmeraum der Gaserzeugungseinheit gekoppelt sein. Hierdurch kann das Arretierungselement mit Gas beaufschlagt werden und eine besonders schnelle Entkopplung der beiden Bauteile bewirken. Das Arretierungselement (auch Schubelement genannt) kann beispielsweise gleitend in dem Führungsraum gelagert sein. Hierdurch kann die Entkopplung der beiden Bauteile schnell und sicher ausgeführt werden.

Das Arretierungselement kann beispielsweise als ein Arretierungsbolzen, ein Arretierungsstift, ein Arretierungssplint oder ein Arretierungskolben ausgebildet sein. Zusätzlich kann das Arretierungselement beispielsweise am freien Schaftende angefast ausgebildet sein. Dies ermöglicht eine einfache Einführung des Arretierungselements in seine Arretierungsstellung an den Bauteilen.

Das Arretierungselement kann zum Beispiel einen Kragen, insbesondere einen Ringkragen, eine Ringscheibe oder dergleichen, aufweisen. Der Kragen kann beispielsweise einen zum Innenumfang des Führungsraums komplementären Außenumfang aufweisen. Insbesondere ist ein den Außenumfang repräsentierender Außenkragen, insbesondere dessen Außenseite, mit einer Gleitschicht versehen oder aus einem Gleitmittel, insbesondere einem entsprechenden gleitfähigen Material, gebildet.

Der Kragen kann beispielsweise einen größeren Durchmesser als der Arretierungsschaft aufweisen. Der Kragen kann insbesondere derart eingerichtet sein, dass dieser bei Zündung oder Auslösung der Antriebseinheit, insbesondere der Schubeinheit oder der Gaserzeugungseinheit, mit einem solchem Druck beaufschlagbar ist, dass das Arretierungselement in das Arretierungsmodul beschleunigt hineinbewegbar ist. Dabei wird das Schaftende aus seiner Arretierungsstellung in den beiden Bauteilen herausgezogen und die beiden Bauteile werden voneinander entkoppelt oder gelöst oder getrennt.

Der Kraftspeicher kann beispielsweise als eine Schraubenfeder ausgebildet sein. Der Kraftspeicher weist eine vorgegebene Anpresskraft auf, welche in einer Arretierungsstellung des Arretierungselements (auch Ruhelage oder Ausgangslage oder Arretierungslage genannt) gegen den Kragen drückt und das Arretierungselement in seiner Arretierungsstellung hält, in welcher die beiden Bauteile mittels des Arretierungselement arretiert miteinander verbunden sind. Der Kraftspeicher kann beispielsweise einerseits am Kragen und andererseits an einem der Öffnung gegenüberliegenden Gehäusedeckel gelagert oder befestigt sein.

Die Gaserzeugungseinheit kann als ein pyrotechnischer Gasgenerator, insbesondere ein pyrotechnischer Treibsatz oder pyrotechnischer Antrieb, ausgebildet sein. Die Schubeinheit kann als ein tangential angeschlossener Hebering, ein direkter Druckanschluss, ein axialer Ausrückhebel, ein radial drückbarer Keil oder als ein tangential angeschlossenes Bewegungsgewinde ausgebildet sein.

Das Arretierungsgehäuse kann außen am Gehäuseboden mindestens eine Verbindungsschnittstelle zur formschlüssigen und/oder kraftschlüssigen Verbindung des Entkopplungsmoduls an einem der Bauteile umfassen. Eine erste Verbindungsstelle kann beispielsweise als eine Verbindungsbuchse, insbesondere ein Steckbuchse oder Schraubbuchse, ausgebildet sein. Eine zweite Verbindungsstelle kann als eine Verbindungsklemme, ein Verbindungsklip oder ein Verbindungshaken ausgebildet sein.

Die Aufgabe wird erfindungsgemäß zudem gelöst durch einen Fahrzeugsitz mit dem zuvor beschriebenen Entkopplungsmechanismus zur Entkopplung der zwei miteinander lösbar verbundenen Bauteile, wie zum Beispiel zur Entkopplung eines an einer Fahrzeugkarosserie lösbar fixierten Fahrzeugsitzes.

Zusammenfassend und mit anderen Worten ausgedrückt ist durch die Erfindung eine Kopplung beziehungsweise eine Entkopplung über einen Bolzen per Formschluss bereitgestellt. Der Bolzen kann durch Aktuation gezogen werden, so dass dieser Bolzen eine Verbindung eines Teilsystems von einem Gesamtsystem lösen kann (auch öffnen oder entriegeln genannt). Die Aktuation kann über eine Antriebseinheit, insbesondere eine Schubeinheit oder einen Gasgenerator (auch Pyroelement genannt), erfolgen, welche sehr schnell angesteuert werden kann und in kurzer Zeit einen hohen Druckaufbau (Zugkraft) ermöglicht.

Die Erfindung ermöglicht eine schnelle Entkopplung von Teilsystemen zum Beispiel bei einem Unfall. Zudem ermöglicht die Erfindung eine schnelle Schaffung zumindest einer alternativen Kinematik der Sitzstruktur und damit des Fahrzeugsitzes, um die Position des Insassen kontrollieren zu können. Der Entkopplungsmechanismus kann insbesondere modular aufgebaut und für verschiedene Anwendungen ausgebildet sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine Schnittdarstellung eines erfindungsgemäßen Entkopplungsmechanismus gemäß eines ersten Ausführungsbeispiels mit einem Entkopplungsmodul in einer Arretierungslage oder Ausgangslage,
- Fig. 3:: eine Schnittdarstellung des Entkopplungsmechanismus gemäß Figur 2 mit dem Entkopplungsmodul in einer entkoppelten Lage,
- Fig. 4:: eine Schnittdarstellung des Entkopplungsmechanismus gemäß Figur 2 bei Auslösung oder Zündung einer Gaserzeugungseinheit,
- Fig. 5:: schematisch eine perspektivische Darstellung des Entkopplungsmoduls,
- Fig. 6:: in schematischer Darstellung ein Entkopplungsmodul eines zweiten Ausführungsbeispiels,
- Fig. 7:: in schematischer Darstellung ein Entkopplungsmodul eines dritten Ausführungsbeispiels,
- Fig. 8:: in schematischer Darstellung ein Entkopplungsmodul eines vierten Ausführungsbeispiels,
- Fig. 9:: in schematischer Darstellung ein Entkopplungsmodul eines fünften Ausführungsbeispiels und
- Fig. 10:: in schematischer Darstellung ein Entkopplungsmodul eines sechsten Ausführungsbeispiels.

Einander entsprechende Teile sind in allen Figuren mit den gleichen Bezugszeichen versehen.

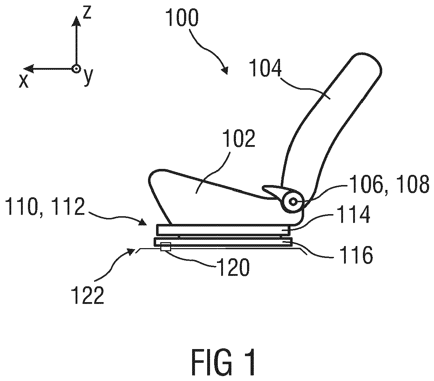

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet.

Die Unterschiene 116 kann lösbar beispielsweise mittels eines nachfolgend im Detail beschriebenen Entkopplungsmechanismus 120 mit einem Träger 122, insbesondere einem Längsträger oder einem Karosserieboden, eines Fahrzeuges verbunden sein.

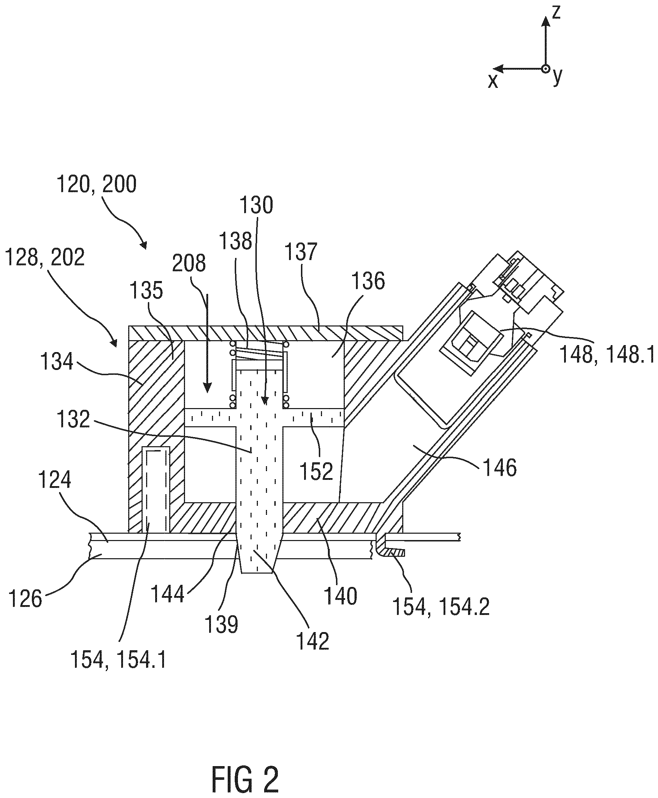

Figur 2 zeigt in Schnittdarstellung ein erstes Ausführungsbeispiel des erfindungsgemäßen Entkopplungsmechanismus 120 für zwei lösbar miteinander verbundene Bauteile 124, 126, zum Beispiel zur Entkopplung eines Teilmoduls von einem Gesamtmodul oder eines Bauteils von einem fahrzeugfesten Bauteil, wie zum Beispiel zur Entkopplung der Unterschiene 116 von dem Träger 122 (dargestellt in Figur 1).

Der Entkopplungsmechanismus 120 umfasst zumindest ein Entkopplungsmodul 128 mit einem Arretierungselement 130, das die beiden Bauteile 124 und 126 lösbar miteinander verbindet und das einen Arretierungsschaft 132 aufweist.

Das Entkopplungsmodul 128 kann ein Arretierungsgehäuse 134 mit einem inneren Führungsraum 136 für das Arretierungselement 130 umfassen. Das Arretierungsgehäuse 134 kann einteilig oder mehrteilig ausgebildet sein. Beispielsweise kann das Arretierungsgehäuse 134 einen hohlzylindrischen Grundkörper 135 umfassen, der den inneren Führungsraum 136 aufweist. Ein oberes offenes Ende des hohlzylindrischen Grundkörpers 135 kann mit einem Gehäusedeckel 137 abgedeckt oder verschlossen sein. Der Gehäusedeckel 137 kann fest mit dem hohlzylindrischen Grundkörper 135 verbunden, zum Beispiel verschweißt oder verklebt, sein.

Das Arretierungselement 130 ist beweglich in dem Führungsraum 136 gelagert. In einem verbundenen Zustand 200 der beiden Bauteile 124, 126 (auch arretierte Lage oder arretierter Zustand oder Ruhelage, Ausgangslage genannt), wie in Figur 2 dargestellt, ist das Arretierungselement 130 mittels eines Kraftspeichers 138 zum arretierenden Verbinden der beiden Bauteile 124, 126 vorgespannt gelagert. Der Kraftspeicher 138 ist beispielsweise als eine Schraubenfeder ausgebildet.

Der Führungsraum 136 weist beispielsweise in einem Gehäuseboden 140 für ein Schaftende 142 des Arretierungselements 130 eine Öffnung 144 auf, durch welche das Schaftende 142 in dem verbundenen Zustand 200 der beiden Bauteile 124, 126 zumindest bereichsweise aus dem Arretierungsgehäuse 134 herausragt und die beiden Bauteile 124, 126 arretiert miteinander verbindet. Das Arretierungselement 130 ist in eine Arretierungsstellung 202 gestellt, in welcher das Arretierungselement 130 mittels des Kraftspeichers 138 gehalten wird und ist.

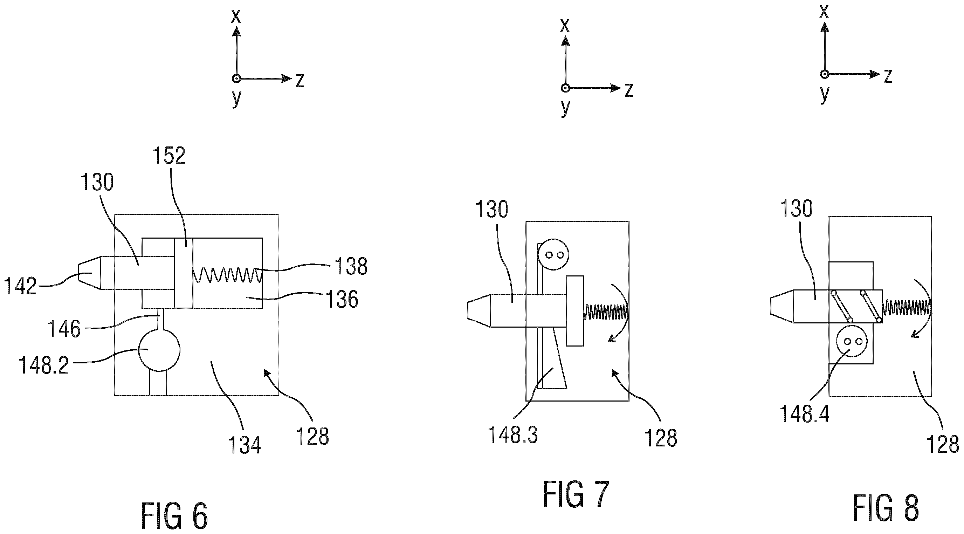

Das Arretierungsgehäuse 134 weist einen Aufnahmeraum 146 für eine Antriebseinheit 148, beispielsweise eine Gaserzeugungseinheit 148.1, auf. Die Antriebseinheit 148 wird nachfolgend am Beispiel der Gaserzeugungseinheit 148.1 beschrieben. Alternative Antriebe sind in den Figuren 6 bis 10 beschrieben.

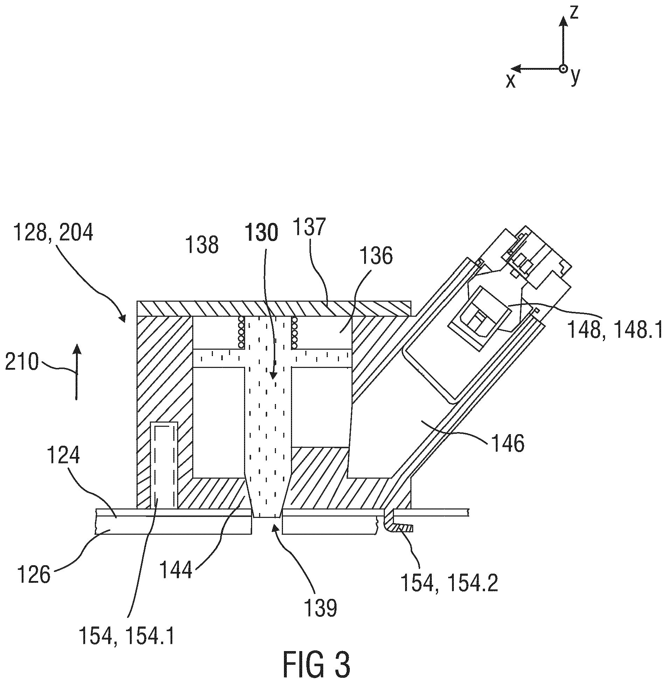

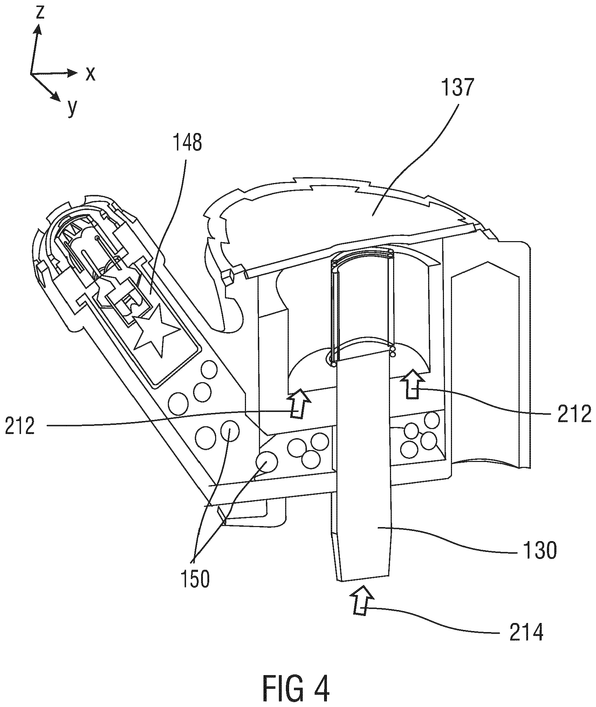

Der Aufnahmeraum 146 ist fluidisch mit dem Führungsraum 136 gekoppelt, um bei Auslösung oder Zündung der Gaserzeugungseinheit 148.1 Gas 150 (dargestellt in Figur 4) in den Führungsraum 136 zu führen, so dass sich das Arretierungselement 130 beschleunigt in den Führungsraum 136 hineinbewegt und die beiden Bauteile 124, 126 voneinander entkoppelt oder trennt, wie in Figur 3 dargestellt. Das Arretierungselement 130 bewegt sich dabei weg von den Bauteilen 124, 126 in den Führungsraum 136 hinein in Richtung des Gehäusedeckels 137.

Zusätzlich kann das Arretierungselement 130 beispielsweise am freien Schaftende 142 angefast ausgebildet sein. Dies ermöglicht eine einfache Einführung des Arretierungselements 130 in seiner Arretierungsstellung 202 in Arretierungsaufnahmen 139 in den Bauteilen 124, 126.

Dadurch, dass der Führungsraum 146 fluidisch mit dem Aufnahmeraum 146 der Gaserzeugungseinheit 148.1 gekoppelt ist, kann das Arretierungselement 130 mit Gas 150 beaufschlagt werden und eine besonders schnelle Entkopplung der beiden Bauteile 124, 126 bewirken.

Das Arretierungselement 130 (auch Schubelement genannt) kann beispielsweise gleitend in dem Führungsraum 136 gelagert sein. Das Arretierungselement 130 kann beispielsweise als ein Arretierungsbolzen, ein Arretierungsstift, ein Arretierungssplint oder ein Arretierungskolben ausgebildet sein.

Das Arretierungselement 130 kann zum Beispiel einen Kragen 152, insbesondere einen Ringkragen, eine Ringscheibe oder dergleichen, aufweisen. Der Kragen 152 kann beispielsweise einen zum Innenumfang des Führungsraums 136 komplementären Außenumfang aufweisen. Insbesondere ist ein den Außenumfang repräsentierender Außenrand des Kragens 152 mit einem Gleitmittel versehen oder aus einem Gleitmaterial gebildet.

Der Kragen 152 kann beispielsweise einen größeren Durchmesser als der Arretierungsschaft 132 aufweisen. Der Kragen 152 kann insbesondere derart eingerichtet sein, dass dieser bei Zündung oder Auslösung der Gaserzeugungseinheit 148.1 mit einem solchem Druck durch das in den Führungsraum 136 einströmende Gas 150 beaufschlagbar ist, wodurch das Arretierungselement 130 in das Arretierungsmodul beschleunigt hineinbewegbar ist.

Der Kraftspeicher 138 kann beispielsweise als eine Schraubenfeder ausgebildet sein. Der Kraftspeicher 138 weist eine vorgegebene Anpresskraft gemäß Pfeil 208 auf, welche im verbundenen Zustand 200 der Bauteile 124, 126 gegen den Kragen 152 drückt und das Arretierungselement 130 in seiner Arretierungsstellung 202 hält, in welcher die beiden Bauteile 124, 126 arretiert und miteinander verbunden sind.

Der Kraftspeicher 138 kann beispielsweise einerseits am Kragen 152 und andererseits an dem der Öffnung 144 gegenüberliegenden Gehäusedeckel 137 gelagert oder befestigt sein.

Die Gaserzeugungseinheit 148.1 kann als ein pyrotechnischer Gasgenerator, insbesondere ein pyrotechnischer Treibsatz oder pyrotechnischer Antrieb, ausgebildet ist.

Das Arretierungsgehäuse 134 kann außen am Gehäuseboden 140 mindestens eine Verbindungsschnittstelle 154 zur formschlüssigen und/oder kraftschlüssigen Verbindung des Entkopplungsmoduls 128 an einem der Bauteile 124, 126 umfassen. Eine erste Verbindungsstelle 154.1 kann beispielsweise als eine Verbindungsbuchse, insbesondere ein Steckbuchse oder Schraubbuchse, ausgebildet sein. Eine zweite Verbindungsstelle 154.2 kann als eine Verbindungsklemme, ein Verbindungsklip oder ein Verbindungshaken ausgebildet sein.

Figur 3 zeigt das Entkopplungsmodul 128 mit dem Arretierungselement 130 in der nicht arretierenden Stellung 204. Das Arretierungselement 130 wird bei Auslösung oder Zündung der Gaserzeugungseinheit 148.1 derart weit in das Entkopplungsmodul 128 hineinbewegt, insbesondere aus seiner Arretierungsstellung 202 (dargestellt in Figur 2) in den beiden Bauteilen 124, 126 in die nicht arretierende Stellung 204 (auch entkoppelnde Stellung genannt) bewegt, insbesondere gezogen, dass die beiden Bauteile 124, 126 voneinander entkoppelt werden. Je nach Art der Arretierungsstellung 202 kann das Arretierungselement 130 in der nicht arretierenden Stellung 204 nur aus einem der beiden Bauteile 124, 126 oder aus beiden Bauteilen 124, 126 herausbewegt werden oder sein.

Das Arretierungselement 130 wird dabei mit einer größeren Kraft als die Kraft des Kraftspeichers 138 und entgegen der Kraft des Kraftspeichers 138 in den Führungsraum 136 gemäß Pfeil 210 hineinbewegt, bis es an dem Gehäusedeckel 137 anschlägt.

Figur 4 zeigt eine Schnittdarstellung des Entkopplungsmechanismus 120 gemäß Figur 2 bei Auslösung oder Zündung der Gaserzeugungseinheit 148.1. Das Gas 150 wird von der Gaserzeugungseinheit 148.1 in den Aufnahmeraum 146 freigesetzt und strömt von diesem Aufnahmeraum 146 in den Führungsraum 136, bis es in Angriff an den Kragen 152 des Arretierungselements 130 gemäß Pfeile 212 gelangt. Infolgedessen wird das Arretierungselement 130 gemäß Pfeil 214 in Richtung des Gehäusedeckels 137 gedrückt und bewegt.

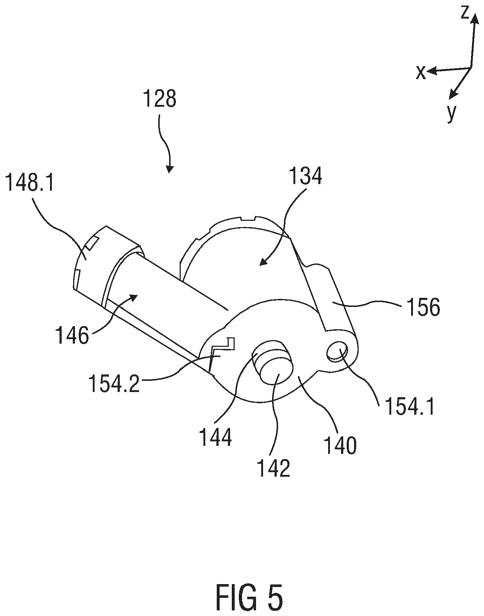

Figur 5 zeigt schematisch eine perspektivische Darstellung des Entkopplungsmoduls 128. Das Arretierungsgehäuse 134 kann einteilig ausgebildet sein und den Aufnahmeraum 146 für die Gaserzeugungseinheit 148.1 und den Führungsraum 136 für das Arretierungselement 130 umfassen, wie in Figur 2 dargestellt.

Das Arretierungsgehäuse 134 ist gießkannenförmig ausgebildet. Das Arretierungsgehäuse 134 kann aber auch jede andere geeignete Form aufweisen. In Figur 5 ist die erste Verbindungsschnittstelle 154.1 als hohlzylindrischer Verbindungskörper an den hohlzylindrischen Grundkörper 135 zur Aufnahme und Lagerung des Arretierungselements 130 angeformt.

Das Schaftende 142 ragt aus der Öffnung 144 am Gehäuseboden 140 heraus.

In sämtlichen beschriebenen Ausführungsformen kann das Arretierungselement 130 als ein Bolzen, Stift oder Splint ausgeführt sein.

Figuren 6 bis 10 zeigen verschiedene alternative Ausführungsformen für die Antriebseinheit 148, welche insbesondere das schnelle Beschleunigen des Arretierungselements 130 aus der Arretierungsstellung 202 (dargestellt in Figur 2) heraus in die nicht arretierende Stellung 204 (dargestellt in Figur 3) in analoger Art und Weise ermöglichen, wie zuvor beispielhaft anhand der Figuren 2 bis 4 beschrieben.

Die Entkopplung oder das Lösen der Arretierung der beiden Bauteile 124, 126 erfolgt für die nachfolgenden Beispiele analog durch das Hineinbewegen des Arretierungselements 130 in das Entkopplungsmodul 128, wie zuvor am Beispiel der Gaserzeugungseinheit 148.1 beschrieben.

Figur 6 zeigt als alternativen Antrieb einen Druckanschluss 148.2.

Anstelle der zuvor beschriebenen Gaserzeugungseinheit 148.1 kann der Druckanschluss 148.2, insbesondere ein direkter Druckluftanschluss, vorgesehen sein, der über die Kopplung von Aufnahmeraum 146 und Führungsraum 136 bei Auslösung oder Aktivierung direkt auf den Kragen 152 wirkt, um das Arretierungselement 130 in den Führungsraum 136 hineinzubewegen.

Anstelle der zuvor beschriebenen Gaserzeugungseinheit 148.1 kann ein direkter Druckanschluss 148.2, insbesondere ein Druckluftanschluss, vorgesehen sein, der über die Kopplung von Aufnahmeraum 146 und Führungsraum 136 bei Auslösung oder Aktivierung direkt auf den Kragen 152 wirkt, um das Arretierungselement 130 in den Führungsraum 136 hineinzubewegen.

Figur 7 zeigt als alternativen Antrieb einen, insbesondere tangential angeschlossenen, Hebering 148.3, der direkt das Arretierungselement 130 bei Auslösung oder Aktivierung beschleunigt in das Entkopplungsmodul 128 hereinbewegt, insbesondere hereinzieht.

Figur 8 zeigt als alternativen Antrieb ein, insbesondere tangential angeschlossenes, Bewegungsgewinde 148.4, das direkt das Arretierungselement 130 bei Auslösung oder Aktivierung beschleunigt in das Entkopplungsmodul 128 hereinbewegt, insbesondere hereinzieht.

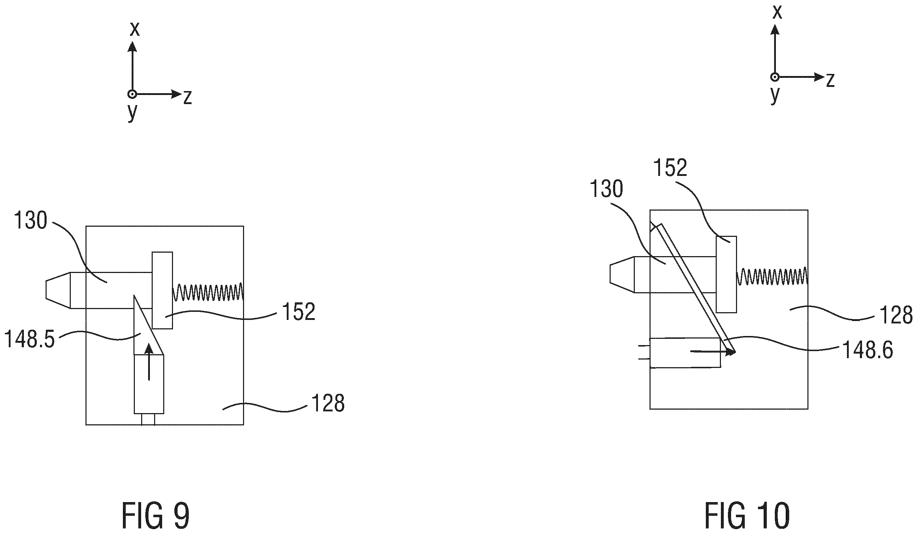

Figur 9 zeigt als alternativen Antrieb einen, insbesondere radial drückbaren, Keil 148.5, der am Arretierungselement 130, insbesondere direkt am Kragen 152, bei Auslösung oder Aktivierung angreift und dabei das Arretierungselement 130 beschleunigt in das Entkopplungsmodul 128 hereinbewegt, insbesondere hereinzieht.

Figur 10 zeigt als alternativen Antrieb einen, insbesondere axialen, Ausrückhebel 148.6, der am Arretierungselement 130, insbesondere direkt am Kragen 152, bei Auslösung oder Aktivierung angreift und dabei das Arretierungselement 130 beschleunigt in das Entkopplungsmodul 128 hereinbewegt, insbesondere hereinzieht.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)

- 120: Entkopplungsmechanismus
- 122: Träger
- 124: Bauteil
- 126: Bauteil
- 128: Entkopplungsmodul
- 130: Arretierungselement
- 132: Arretierungsschaft
- 134: Arretierungsgehäuse
- 135: hohlzylindrischer Grundkörper
- 136: Führungsraum
- 137: Gehäusedeckel
- 138: Kraftspeicher
- 139: Arretierungsaufnahme
- 140: Gehäuseboden
- 142: Schaftende
- 144: Öffnung
- 146: Aufnahmeraum
- 148: Antriebseinheit
- 148.1: Gaserzeugungseinheit
- 148.2: Druckanschluss
- 148.3: Hebering
- 148.4: Bewegungsgewinde
- 148.5: Keil
- 148.6: Ausrückhebel
- 150: Gas
- 152: Kragen
- 154: Verbindungsschnittstelle
- 154.1: erste Verbindungsschnittstelle
- 154.2: zweite Verbindungsschnittstelle

- 200: verbundener Zustand
- 202: Arretierungsstellung
- 204: nicht arretierende Stellung
- 208: Pfeil
- 210: Pfeil
- 212: Pfeil
- 214: Pfeil

- x: Längsrichtung
- y: Querrichtung
- z: Vertikalrichtung

## Patentansprüche

1. Entkopplungsmechanismus (120) für zwei lösbar miteinander verbundene Bauteile (124, 126), umfassend zumindest
- ein Entkopplungsmodul (128) mit einem Arretierungselement (130), das die beiden Bauteile (124, 126) lösbar miteinander verbindet und einen Arretierungsschaft (132) aufweist,
**dadurch gekennzeichnet, dass** das Entkopplungsmodul (128) ein Arretierungsgehäuse (134) mit einem Führungsraum (136) umfasst, in welchem das Arretierungselement (130) beweglich und in einem verbundenen Zustand (200) der beiden Bauteile (124, 126) mittels eines Kraftspeichers (138) zum arretierenden Verbinden der beiden Bauteile (124, 126) vorgespannt gelagert ist,
wobei der Führungsraum (136) in einem Gehäuseboden (140) für ein Schaftende (142) des Arretierungselements (130) eine Öffnung (144) aufweist, durch welche das Schaftende (142) in dem verbundenen Zustand (200) zumindest bereichsweise aus dem Arretierungsgehäuse (134) herausragt, um die beiden Bauteile (124, 126) arretiert miteinander zu verbinden und
wobei das Arretierungsgehäuse (134) für eine Antriebseinheit (148) einen Aufnahmeraum (146) aufweist, der mit dem Führungsraum (136) gekoppelt ist, oder die Antriebseinheit (148) direkt oder indirekt mit dem Arretierungselement (130) bewegungsgekoppelt ist, um bei Auslösung oder Zündung der Antriebseinheit (148) das Arretierungselement (130) mit einer Druckkraft zu beaufschlagen, so dass sich das Arretierungselement (130) beschleunigt in den Führungsraum (136) hineinbewegt und die beiden Bauteile (124, 126) voneinander entkoppelt.

2. Entkopplungsmechanismus (120) nach Anspruch 1,
wobei das Arretierungselement (130) als ein Arretierungsbolzen, ein Arretierungsstift, ein Arretierungssplint oder ein Arretierungskolben ausgebildet ist.

3. Entkopplungsmechanismus (120) nach Anspruch 1 oder 2,
wobei das Arretierungselement (130) einen Kragen (152) aufweist, der einen zum Innenumfang des Führungsraums (136) komplementären Außenumfang aufweist.

4. Entkopplungsmechanismus (120) nach Anspruch 3,
wobei der Kragen (152) einen größeren Durchmesser als der Arretierungsschaft (132) aufweist.

5. Entkopplungsmechanismus (120) nach einem der vorhergehenden Ansprüche,
wobei der Kraftspeicher (138) als eine Schraubenfeder ausgebildet ist.

6. Entkopplungsmechanismus (120) nach einem der vorhergehenden Ansprüche,
wobei der Kraftspeicher (138) einerseits am Kragen (152) und andererseits an einem der Öffnung (144) gegenüberliegenden Gehäusedeckel (137) gelagert oder befestigt ist.

7. Entkopplungsmechanismus (120) nach einem der vorhergehenden Ansprüche,
wobei die Antriebseinheit (148) als eine Gaserzeugungseinheit (148.1) ausgebildet ist.

8. Entkopplungsmechanismus (120) nach einem der vorhergehenden Ansprüche,
wobei das Arretierungsgehäuse (134) außen am Gehäuseboden (140) mindestens eine Verbindungsschnittstelle (154) zur formschlüssigen und/oder kraftschlüssigen Verbindung des Entkopplungsmoduls (128) an einem der Bauteile (124, 126) umfasst.

9. Entkopplungsmechanismus (120) nach Anspruch 8,
wobei eine erste Verbindungsstelle (154.1) als eine Verbindungsbuchse ausgebildet ist und eine zweite Verbindungsstelle (154.2) als eine Verbindungsklemme oder ein Verbindungsklip oder ein Verbindungshaken ausgebildet ist.

10. Fahrzeugsitz (100) mit einem Entkopplungsmechanismus (120) nach einem der vorhergehenden Ansprüche.
